# EUROPEAN PATENT APPLICATION

(11) **EP 4 823 015 A1**
(43) Date of publication of application: **14.10.2026**
(21) Application number: 23960552.0
(22) Date of filing: 07.12.2023
(51) Int. Cl.: H04L 1/00

(54) **INSTRUCTION INFORMATION SENDING METHOD, INSTRUCTION INFORMATION RECEIVING METHOD, TERMINAL, NETWORK DEVICE, SYSTEM AND MEDIUM**

(71) Applicant: Beijing Xiaomi Mobile Software Co., Ltd., Beijing 100085 (CN)
(72) Inventor: LIU, Min, Beijing 100085 (CN)
(74) Representative: Dehns Germany Partnerschaft mbB
(86) International application number: PCT/CN2023/137106
(87) International publication number: WO 2025/118240

(57) **Abstract**

The present disclosure relates to an instruction information sending method, an instruction information receiving method, a terminal, a network device, a system and a medium. The instruction information receiving method comprises: a terminal receives instruction information sent by a network device, the instruction information being used for instructing the terminal to activate a channel state information (CSI) processing model based on artificial intelligence (AI) or machine learning (ML) before applying the CSI processing model, wherein the CSI processing model is used for performing CSI processing on the basis of spatial domain information, frequency domain information and time domain information. In embodiments of the present disclosure, by receiving the instruction information sent by the network device, the terminal determines whether to activate the CSI processing model or not, so that the terminal can activate the CSI processing model at an appropriate time on the basis of the instruction from the network device, so as to ensure the accuracy of applying the CSI processing model.

## Description

### TECHNICAL FIELD

The present disclosure relates to the field of communication technology, and in particular to a method, terminal, network device, system and medium for sending and receiving indication information.

### BACKGROUND

In the channel state information (CSI) processing based on artificial intelligence (AI) or machine learning (ML), CSI can be predicted and compressed based on the AI or ML model. In the compression based on spatial information and frequency information, namely s-f compression, the compression performance is not improved enough. The compression performance can be further improved by compressing the time domain information (time), spatial information and frequency domain information, namely t-s-f or s-f-t compression.

### SUMMARY

Embodiments of the present disclosure provide a method, terminal, network device, system and medium for sending and receiving indication information.

In a first aspect, embodiments of the present disclosure provide a method for receiving indication information, where the method includes:
receiving, by a terminal, the indication information sent by a network device, where the indication information indicates the terminal to activate a channel state information CSI processing model before applying the CSI processing model based on artificial intelligence AI or machine learning ML; and where the CSI processing model is used for performing CSI processing based on spatial domain information, frequency domain information, and time domain information.

In a second aspect, embodiments of the present disclosure provide a method for sending indication information, where the method includes:
sending, by a network device, the indication information to a terminal, where the indication information indicates the terminal to activate a channel state information CSI processing model before applying the CSI processing model based on artificial intelligence AI or machine learning ML; and where the CSI processing model is used for performing CSI processing based on spatial domain information, frequency domain information, and time domain information.

In a third aspect, embodiments of the present disclosure provide a terminal, where the terminal includes:
a transceiver module configured to receive indication information sent by a network device, where the indication information indicates the terminal to activate a channel state information CSI processing model before applying the CSI processing model based on artificial intelligence AI or machine learning ML; and where the CSI processing model is used for performing CSI processing based on spatial domain information, frequency domain information, and time domain information.

In a fourth aspect, embodiments of the present disclosure provide a network device, where the network device includes:
a transceiver module configured to send indication information to a terminal, where the indication information indicates the terminal to activate a channel state information CSI processing model before applying the CSI processing model based on artificial intelligence AI or machine learning ML; and where the CSI processing model is used for performing CSI processing based on spatial domain information, frequency domain information, and time domain information.

In a fifth aspect, embodiments of the present disclosure provide a terminal, where the terminal includes:
one or more processors;
where the terminal is configured to perform the method according to the first aspect.

In a sixth aspect, embodiments of the present disclosure provide a network device, where the network device includes:
one or more processors;
where the network device is configured to perform the method according to the second aspect.

In a seventh aspect, embodiments of the present disclosure provide a communication system, where the communication system includes a terminal and a network device,
where the terminal is configured to implement the method according to the first aspect;
the network device is configured to implement the method according to the second aspect.

In an eighth aspect, embodiments of the present disclosure provide a storage medium, where the storage medium stores instructions, and
the instructions, when running on a communication device, cause the communication device to perform the method according to the first aspect or the second aspect.

In these disclosed embodiments, the terminal receives indication information sent by the network device to learn whether the CSI processing model is to be activated, so that the terminal can activate the CSI processing model at an appropriate time based on the indication of the network device to ensure the accuracy of applying the CSI processing model.

### BRIEF DESCRIPTION OF THE DRAWINGS

In order to more clearly illustrate the technical solutions in the embodiments of the present disclosure, the drawings required for describing the embodiments are introduced below. Following drawings are only some embodiments of the present disclosure and do not impose specific limitations on the protection scope of the present disclosure.
FIG. 1 is an exemplary architecture schematic diagram of a communication system provided according to embodiments of the present disclosure.
FIG. 2a is an exemplary interaction diagram of a method provided according to embodiments of the present disclosure.
FIG. 2b is a schematic diagram of a CSI processing model provided according to embodiments of the present disclosure.
FIG. 2c to FIG. 2d are structure schematic diagrams of the MAC CE provided according to embodiments of the present disclosure.
FIG. 3a to FIG. 3d are exemplary flow charts of a method provided according to embodiments of the present disclosure.
FIG. 4a to FIG. 4d are exemplary flow charts of a method provided according to embodiments of the present disclosure.
FIG. 5a is a structure schematic diagram of a terminal according to embodiments of the present disclosure.
FIG. 5b is a structure schematic diagram of a network device according to embodiments of the present disclosure.
FIG. 6a is a schematic diagram of a communication device according to embodiments of the present disclosure.
FIG. 6b is a schematic diagram of a communication device according to embodiments of the present disclosure.

### DETAILED DESCRIPTION

Embodiments of the present disclosure provide a method, terminal, network device, system and medium for sending and receiving indication information.

In a first aspect, embodiments of the present disclosure provide a method for receiving indication information, where the method includes:
receiving, by a terminal, the indication information sent by a network device, where the indication information indicates the terminal to activate a channel state information CSI processing model before applying the CSI processing model based on artificial intelligence AI or machine learning ML; and where the CSI processing model is used for performing CSI processing based on spatial domain information, frequency domain information, and time domain information.

In the above embodiment, the terminal learns whether the CSI processing model is to be activated by receiving the indication information sent by the network device, so that the terminal can reactivate the CSI processing model at an appropriate time based on the indication of the network device to ensure the accuracy of applying the CSI processing model.

In combination with the embodiments of the first aspect, in some embodiments, receiving, by the terminal, the indication information sent by the network device includes one of following:
receiving, by the terminal, a medium access control control element MAC CE sent by the network device, where the MAC CE includes the indication information; or
receiving, by the terminal, downlink control information DCI sent by the network device, where the DCI includes the indication information.

In the above embodiment, the terminal may receive indication information sent by the network device through MAC CE or DCI, so as to promptly know whether the CSI processing model is to be activated in different ways.

In combination with the embodiments of the first aspect, in some embodiments, the MAC CE includes a MAC sub-header, and the MAC sub-header includes indication information.

In the above embodiment, the terminal may learn whether the CSI processing model is to be activated through the MAC sub-header. Accordingly, the MAC CE may not contain specific information content, which is conducive to saving signaling resources of the MAC CE.

In combination with the embodiment of the first aspect, in some embodiments, the MAC CE further includes a first information field, and the first information field indicates at least one of following:
a model identifier corresponding to the CSI processing model;
a cell identifier corresponding to the CSI processing model;
a function identifier corresponding to the CSI processing model.

In the above embodiment, the MAC CE includes a MAC sub-header and a first information field, and can indicate relevant identification information of the CSI processing model to be activated through the first information field, so that the terminal can accurately activate the indicated model.

In combination with the embodiments of the first aspect, in some embodiments, the MAC CE does not include the fourth information field, and the fourth information field is an information field used to indicate activation or deactivation.

In the above embodiment, compared with the conventional MAC CE, the MAC CE in this embodiment can omit the information field for indicating activation or deactivation to save signaling resources.

In combination with the embodiments of the first aspect, in some embodiments, the DCI includes a second information field, and the second information field includes indication information.

In the above embodiment, the terminal promptly learns whether the CSI processing model is to be activated through the second information field in the DCI.

In combination with the embodiments of the first aspect, in some embodiments, the DCI also includes a third information field, and the third information field indicates an identifier corresponding to the CSI processing model, where the identifier is at least one of a model identifier, a cell identifier, or a function identifier.

In the above embodiment, the identification information of the CSI processing model to be activated is indicated by the third information field of the DCI, so that the terminal can accurately know the CSI processing model to be activated.

In combination with the embodiments of the first aspect, in some embodiments, the format of the DCI is a defined DCI format (DCI format), or the DCI is scrambled by a defined Radio Network Temporary Identity (RNTI).

In the above embodiment, the DCI used to indicate the activation model may be a specific DCI format, or a DCI scrambled by a special RNRI, so that the terminal can accurately monitor the corresponding DCI.

In combination with the embodiment of the first aspect, in some embodiments, when the MAC CE includes indication information, the effective time of the indication information is after the first time and is spaced from the first time by a first duration;
where the first time is an uplink time when the terminal sends feedback information corresponding to the MAC CE, and the first duration includes a protocol-defined duration and a duration configured by the network device.

In the above embodiment, the terminal may determine the effective time of the MAC CE or the indication information based on the MAC CE carrying the indication information, so as to activate the CSI processing model at an appropriate time.

In combination with the embodiments of the first aspect, in some embodiments, the effective time t satisfies: $t = X + Z + {K}_{Mac} , and X = n + {K}_{offset} + {K}_{1} ;$
where X represents the first time, Z represents the protocol-defined duration, *K_{Mac}*, *K_{offset}*, and *K₁* are values indicated by the network device, and n represents a downlink time when the terminal receives the MAC CE.

In the above embodiment, the terminal may determine the effective time based on relevant parameters to activate the model at an appropriate time.

In combination with the embodiment of the first aspect, in some embodiments, when the DCI includes indication information, the effective time of the indication information is after the second duration of the second time;
where the second time is a downlink time corresponding to an uplink time when the terminal receives the DCI, and the second duration is a protocol-defined duration or a duration reported by the terminal.

In the above embodiment, the terminal may determine the effective time of the DCI or the indication information based on the DCI carrying the indication information, so as to activate the CSI processing model at an appropriate time.

In combination with the embodiments of the first aspect, in some embodiments, the effective time t satisfies:
after (*Y1 + a)* or in a first time-domain unit after (*Y1 + a)*, and $Y 1 = \left⌊Y⋅\frac{{2}^{μ {1}_{PUSCH}}}{{2}^{μ {2}_{PDCCH}}}\right⌋$ ;
where Y1 represents the second time, a represents the second duration, Y represents the uplink time when the terminal receives the DCI, represents a rounding-up operation, µ1 is a constant determined according to a subcarrier spacing SCS of a physical uplink shared channel PUSCH, and µ2 is a constant determined according to an SCS of a physical downlink control channel PDCCH.

In the above embodiment, the terminal may determine the effective time based on relevant parameters to activate the model at an appropriate time.

In combination with the embodiments of the first aspect, in some embodiments, activating the CSI processing model includes: resetting accumulated CSI information in the CSI processing model to a default value or an initial value; or resetting the accumulated CSI information based on a terminal capability or terminal implementation.

In the above embodiment, after receiving the indication information, the terminal may activate the CSI processing model to reset the accumulated CSI information, so as to ensure the accuracy of the re-application model.

In combination with the embodiments of the first aspect, in some embodiments, the accumulated CSI information is determined based on historical CSI obtained from multiple measurements.

In the above embodiment, the accumulated CSI information is affected by the historical CSI data measured by the terminal. After the accumulated CSI information is reset, the terminal no longer applies inappropriate historical CSI data, which facilitates improving the accuracy of the model.

In a second aspect, embodiments of the present disclosure provide a method for sending indication information, the method includes:
sending, by a network device, the indication information to a terminal, where the indication information indicates the terminal to activate a channel state information CSI processing model before applying the CSI processing model based on artificial intelligence AI or machine learning ML; and where the CSI processing model is used for performing CSI processing based on spatial domain information, frequency domain information, and time domain information.

In combination with the embodiment of the second aspect, in some embodiments, sending, by the network device, the indication information to the terminal includes one of following:
sending, by the network device, a medium access control control element MAC CE to the terminal, where the MAC CE includes the indication information; or
sending, by the network device, downlink control information DCI to the terminal, where the DCI includes the indication information.

In combination with the embodiments of the second aspect, in some embodiments, the MAC CE includes a MAC sub-header, and the MAC sub-header includes indication information.

In combination with the embodiment of the second aspect, in some embodiments, the MAC CE further includes a first information field, and the first information field indicates at least one of following:
a model identifier corresponding to the CSI processing model;
a cell identifier corresponding to the CSI processing model;
a function identifier corresponding to the CSI processing model.

In combination with the embodiments of the second aspect, in some embodiments, the MAC CE does not include the fourth information field, and the fourth information field is an information field used to indicate activation or deactivation.

In combination with the embodiments of the second aspect, in some embodiments, the DCI includes a second information field, and the second information field includes indication information.

In combination with the embodiments of the second aspect, in some embodiments, the DCI also includes a third information field, and the third information field indicates an identifier corresponding to the CSI processing model, where the identifier is at least one of a model identifier, a cell identifier, or a function identifier.

In combination with the embodiments of the second aspect, in some embodiments, the format of the DCI is a defined DCI format, or the DCI is scrambled by a defined RNTI.

In combination with the embodiment of the second aspect, in some embodiments, when the MAC CE includes indication information, the effective time of the indication information is after the first time and is spaced from the first time by a first duration;
where the first time is an uplink time when the terminal sends feedback information corresponding to the MAC CE, and the first duration includes a protocol-defined duration and a duration configured by the network device.

In combination with the embodiments of the second aspect, in some embodiments, the effective time t satisfies: $t = X + Z + {K}_{Mac} , where X = n + {K}_{offset} + {K}_{1} ;$ where X represents the first time, Z represents the protocol-defined duration, *K_{Mac}*, *K_{offset}*, and *K₁* are values indicated by the network device, and n represents a downlink time when the terminal receives the MAC CE.

In combination with the embodiment of the second aspect, in some embodiments, when the DCI includes the indication information, an effective time of the indication information is after a second time by a second duration;
where the second time is a downlink time corresponding to an uplink time when the terminal receives the DCI, and the second duration is a protocol-defined duration or a duration reported by the terminal.

In combination with the embodiments of the second aspect, in some embodiments, the effective time t satisfies:
after (*Y1 + a)* or in a first time-domain unit after (*Y1 + a)*, and $Y 1 = \left⌊Y⋅\frac{{2}^{μ {1}_{PUSCH}}}{{2}^{μ {2}_{PDCCH}}}\right⌋$ ;
where Y1 represents the second time, a represents the second duration, Y represents the uplink time when the terminal receives the DCI, └ ┘ represents a rounding-up operation, µ1 is a constant determined according to a subcarrier spacing SCS of a physical uplink shared channel PUSCH, and µ2 is a constant determined according to an SCS of a physical downlink control channel PDCCH.

In combination with the embodiments of the second aspect, in some embodiments, activating the CSI processing model includes: resetting the accumulated CSI information in the CSI processing model to a default value or an initial value; or, resetting the accumulated CSI information based on terminal capabilities or terminal implementations.

In combination with the embodiments of the second aspect, in some embodiments, the accumulated CSI information is determined based on historical CSI obtained from multiple measurements by the terminal.

In a third aspect, embodiments of the present disclosure provide a terminal, including:
a transceiver module configured to receive indication information sent by a network device, where the indication information indicates the terminal to activate a channel state information CSI processing model before applying the CSI processing model based on artificial intelligence AI or machine learning ML; and where the CSI processing model is used for performing CSI processing based on spatial domain information, frequency domain information, and time domain information.

In a fourth aspect, embodiments of the present disclosure provide a network device, including:
a transceiver module configured to send indication information to a terminal, where the indication information indicates the terminal to activate a channel state information CSI processing model before applying the CSI processing model based on artificial intelligence AI or machine learning ML; and where the CSI processing model is used for performing CSI processing based on spatial domain information, frequency domain information, and time domain information.

In a fifth aspect, embodiments of the present disclosure provides a terminal, including:
one or more processors;
where the terminal is configured to perform the method according to the first aspect.

In a sixth aspect, embodiments of the present disclosure provide a network device, including:
one or more processors;
where the network device is configured to perform the method according to the second aspect.

In a seventh aspect, embodiments of the present disclosure provide a communication system, including a terminal and a network device, where:
the terminal is configured to implement the method according to the first aspect;
the network device is configured to implement the method according to the second aspect.

In an eighth aspect, embodiments of the present disclosure provide a storage medium, where the storage medium stores instructions, and
the instructions, when running on a communication device, cause the communication device to perform the method according to the first aspect or the second aspect.

In a ninth aspect, embodiments of the present disclosure provide a program product, the program product, when executed by a communication device, cause the communication device to perform the method according to the optional implementation of the first and second aspects.

In a tenth aspect, embodiments of the present disclosure propose a computer program, which, when running on a computer, cause the communication device to perform the method according to the optional implementation of the first and second aspects.

In an eleventh aspect, embodiments of the present disclosure provide a chip or a chip system, where the chip or the chip system includes a processing circuit configured to perform the method according to the optional implementation of the first aspect and the second aspect.

It is understandable that the above-mentioned terminals, network devices, communication systems, storage media, program products, computer programs, chips or chip systems are all used to execute the methods proposed in the embodiments of the present disclosure. Therefore, the beneficial effects that can be achieved can refer to the beneficial effects in the corresponding methods, which will not be repeated here.

The embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementation methods in a certain embodiment can be arbitrarily combined; in addition, the embodiments can be arbitrarily combined, for example, some or all of the steps of different embodiments can be arbitrarily combined, and a certain embodiment can be arbitrarily combined with the optional implementation methods of other embodiments.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", and the like, may mean "one and only one", or "one or more", "at least one", and the like. For example, when using articles such as "a", "an", "the" in English in translation, the noun after the article may be understood as a singular expression or a plural expression.

In the embodiments of the present disclosure, "plurality" refers to two or more.

In some embodiments, the terms "at least one", "one or more", "a plurality of", "multiple", and the like may be used interchangeably.

In some embodiments, "at least one of A and B", "A and/or B", "A in one case, B in another case", "in response to one case A, in response to another case B", and the like, may include following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, and the like, it is also similar with the above.

In some embodiments, the recording method of "A or B" may include following technical solutions according to the situation: in some embodiments, A (A is executed independently of B); in some embodiments, B (B is executed independently of A); in some embodiments, execution is selected from A and B (A and B are selectively executed). When there are more branches such as A, B, C, and the like, it is also similar with the above.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and should not constitute unnecessary restrictions due to the use of prefixes. For example, if the description object is a "field", the ordinal number before the "field" in the "first field" and the "second field" does not limit the position or order between the "fields", and the "first" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number, and can be one or more. Taking the "first device" as an example, the number of "devices" can be one or more. In addition, the objects modified by different prefixes may be the same or different. For example, if the description object is "device", then the "first device" and the "second device" may be the same device or different devices, and their types may be the same or different. For another example, if the description object is "information", then the "first information" and the "second information" may be the same information or different information, and their contents may be the same or different.

In some embodiments, "including A", "including A", "used to indicate A", and "carrying A" can be interpreted as directly carrying A or indirectly indicating A.

In some embodiments, terms such as "in response to...", "in response to determining...", "in the case of...", "at the time of...", "when...", "if...", and the like can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, devices and equipment may be interpreted as physical or virtual, and their names are not limited to the names recorded in the embodiments. In some cases, they may also be understood as "equipment", "device", "circuit", "network element", "node", "function", "unit", "section", "system", "network", "chip", "chip system", "entity", "subject", and the like.

In some embodiments, "network" can be interpreted as devices included in the network, such as access network equipment, core network equipment, and the like.

In some embodiments, "access network device (AN device)" may also be referred to as "radio access network device (RAN device)", "base station (BS)", "radio base station", "fixed station", and in some embodiments may also be understood as "node", "access point", "transmission point (TP)", "reception point (RP)", "transmission and/or reception point (TRP)" "panel", "antenna panel", "antenna array" "cell", "macro cell", "small cell", "femto cell", "pico cell", "sector", "cell group", "serving cell", "carrier", "component carrier", "bandwidth part (BWP)" and the like.

In some embodiments, "terminal" or "terminal device" can be referred to as "user equipment (UE)", "user terminal" "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, and the like.

In some embodiments, acquisition of data, information, and the like, may comply with the laws and regulations of the country where the data is obtained.

In some embodiments, data, information, and the like, may be obtained with the user's consent.

In addition, each element, each row, or each column in the table of the embodiments of the present disclosure may be implemented as an independent embodiment, and the combination of any elements, any rows, and any columns may also be implemented as an independent embodiment.

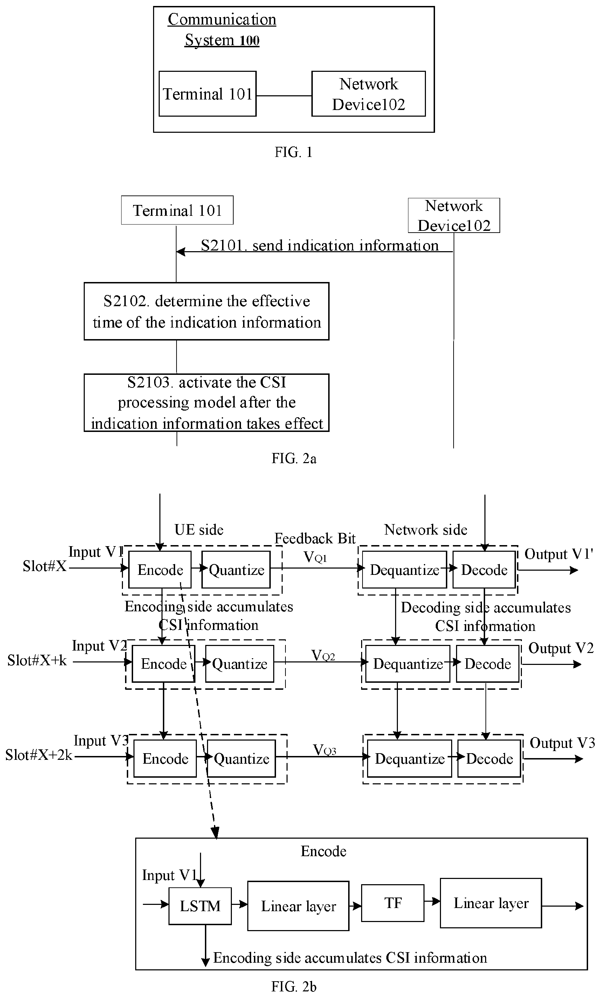

FIG. 1 is an architecture schematic diagram of a communication system according to embodiments of the present disclosure.

As shown in FIG. 1, a communication system 100 includes a terminal 101 and a network device 102.

In some embodiments, the terminal 101 includes, for example, at least one of a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited to these.

In some embodiments, when the network device 102 is a network device, the network device may include at least one of an access network device and a core network device.

In some embodiments, the access network device is, for example, at least one of a node or device that accesses a terminal to a wireless network. The access network device may include an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a wireless fidelity (WiFi) system, but is not limited thereto.

In some embodiments, the technical solution of the present disclosure may be applicable to the Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may be composed of a centralized unit (CU) and a distributed unit (DU), where the CU may also be referred to as a control unit. The CU-DU structure may be used to split the protocol layer of the access network device, with some functions of the protocol layer being centrally controlled by the CU, and the remaining part or all of the functions of the protocol layer being distributed in the DU, and the DU being centrally controlled by the CU, but not limited to this.

In some embodiments, the core network device may be a device including one or more network elements, or may be a plurality of devices or a group of devices, each including all or part of one or more network elements. The network element may be virtual or physical. The core network may include, for example, at least one of the Evolved Packet Core (EPC), the 5G Core Network (5GCN), and the Next Generation Core (NGC). The core network device refers to a network element with a specific function, such as an Access Management Function (AMF), a Service Management Function (SMF), and the like.

It can be understood that the communication system according to the embodiment of the present disclosure is for the purpose of more clearly illustrating the technical solution of the embodiment of the present disclosure, and does not constitute a limitation on the technical solution proposed in the embodiment of the present disclosure. Those skilled in the art can know that with the evolution of the system architecture and the emergence of new business scenarios, the technical solution proposed in the embodiment of the present disclosure is also applicable to similar technical problems.

The following embodiments of the present disclosure may be applied to the communication system 100 or part of the subject shown in FIG. 1, but are not limited thereto.

The subjects shown in FIG. 1 are examples. The communication system may include all or part of the subjects in FIG. 1, and may also include other subjects other than FIG. 1. The number and form of the subjects are arbitrary. The connection relationship between the subjects is an example. The subjects may be connected or disconnected, and the connection may be in any manner, which may be direct or indirect, and may be wired or wireless.

Embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to_{Mac}hine (M2M) system, Internet of Things (IoT) system, Vehicle-to-Everything (V2X), systems using other communication methods, next-generation systems based on them, and the like. In addition, multiple systems can also be combined (for example, a combination of LTE or LTE-A and 5G, and the like) for application.

In the embodiments, s-f compression does not improve the compression performance enough, such as throughput improvement of <10%. By adding time domain information to the compression, such as t-s-f compression, the compression performance can be improved.

In the embodiments, the application process based on AI or ML models such as CSI processing models may include: training phase, inference phase and monitoring phase. For example, in the model inference phase, the terminal 101 obtains measured CSI or obtains measured CSI based on reference signal (RS) measurement, and inputs the measured CSI into the CSI processing model to output predicted CSI.

Optionally, unlike s-f compression, in each inference stage, in addition to obtaining the measured CSI based on the RS at the current moment, t-s-f compression also is to synchronously use the accumulated CSI information of the previous or previous time domain unit as the input of the CSI processing model.

Optionally, the accumulated CSI information may include historical CSI information (or historical information) learned in a specific scenario. If the scenario changes, the learned historical information may be unavailable, that is, the input of the CSI processing model may be unavailable. It is to solve how the terminal 101 applies the CSI processing model in this case.

FIG. 2a is an interactive schematic diagram of a method for sending and receiving indication information according to embodiments of the present disclosure. As shown in FIG. 2a, embodiments of the present disclosure relate to a method for sending and receiving indication information, and the method includes the followings.

In Step S2101, the network device 102 sends indication information to the terminal 101.

In some embodiments, the indication information indicates the terminal 101 to activate the CSI processing model before applying CSI processing model based on the AI or ML.

Optionally, the indication information may be an indication to the terminal 101 to activate the CSI processing model for the first time or to reactivate the CSI processing model. For example, before receiving the indication information, the terminal 101 has not applied the CSI processing model, then after receiving the indication information, the terminal 101 may activate the CSI processing model for the first time. For another example, before receiving the indication information, the terminal 101 has applied or is applying the CSI processing model, then after receiving the indication information, the terminal 101 is to reactivate the CSI processing model, otherwise the CSI processing model will not be applied any more.

In some embodiments, the CSI processing model is used for performing CSI processing according to spatial domain information, frequency domain information, and time domain information. Taking CSI compression as an example, the CSI processing model may be a t-s-f compression model.

Optionally, as shown in FIG. 2b, the CSI processing model may include a long short-term memory (LSTM) module and a sequence model (Transformer, TF) module to process the input information.

Optionally, as shown in reference to FIG. 2b, the CSI processing model may include an encoding part (Encoder) arranged on the terminal 101 side and a decoding part (Decoder) arranged on the network device 102 side.

Taking the coding part of the terminal 101 as an example, the input information (or simply input) of the CSI processing model on the terminal 101 side includes: the CSI obtained by measuring the downlink reference signal at the current moment and the accumulated CSI information before the current moment, and the output information (or simply output) of the CSI processing model is the compressed CSI. The terminal 101 can encode and quantize (Quantizer) the input information (such as V₁) based on the CSI processing model to achieve compression of the CSI, and can transmit the compressed information to the network device 102. The network device 102 dequantizes (De-quantizer) and decodes the received information to obtain decompressed information. Among them, the accumulated CSI information will be generated on both the terminal 101 side and the network device 102 side.

Optionally, the downlink reference signal may be a channel state information reference signal (CSI-RS). Based on the configuration of the network device 102, the CSI-RS may be transmitted at a certain period. Alternatively, the CSI-RS may be transmitted at a certain period within a period of time, such as within a time window of base station activation.

Optionally, the accumulated CSI information is determined based on historical CSI obtained by multiple measurements. For example, before the current moment, the terminal 101 measures CSI-RS at multiple moments, obtains the measured CSI corresponding to each CSI-RS, which are recorded as multiple historical CSIs, and the accumulated CSI information can be calculated and determined based on the multiple historical CSIs.

In some embodiments, activating the CSI processing model includes: resetting the accumulated CSI information in the CSI processing model to a default value or an initial value; or resetting the accumulated CSI information based on terminal capabilities or terminal implementations.

Optionally, the default value may be 0, and the initial value may be a predefined or specific value. Optionally, the reset value may be different depending on the terminal capability.

Optionally, the accumulated CSI information may be accumulated CSI information of a time unit before the terminal 101 receives the indication information. The time unit may be related to the period of the CSI-RS, or may be one or more symbols, or one or more time slots, or one or more milliseconds.

In some embodiments, the indication information may be sent via a MAC CE or a DCI. For example, the network device 102 sends a MAC CE to the terminal 101, and the MAC CE includes the indication information; for another example, the network device 102 sends a DCI to the terminal 101, and the DCI includes the indication information.

Optionally, the indication information may occupy one or more bits.

In one manner, when the indication information is sent through the MAC CE, following two examples may be included.

In the first example, the MAC CE includes only the MAC sub-header, and the MAC sub-header includes indication information. In this example, the MAC CE includes only the MAC sub-header, but does not include specific information content. The MAC sub-header includes indication information, that is, the CSI processing model is activated through the MAC sub-header indication.

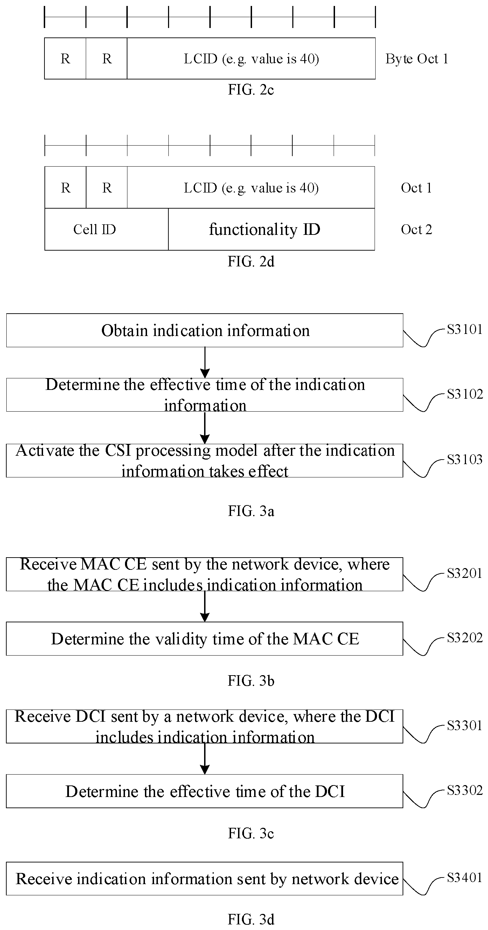

As shown in FIG. 2c, the MAC sub-header includes a logical channel identification (LCID) field and a reserved (R) field. The CSI processing model is activated through a specific LCID indication.

In the second example, the MAC CE includes a MAC sub-header and a first information field, where the first information field indicates at least one of following:
a model identifier corresponding to the CSI processing model;
a cell identifier corresponding to the CSI processing model;
a function identifier corresponding to the CSI processing model.

Optionally, the cell identifier indicates the cell where the CSI processing model to be activated is located. The model identifier or function identifier is used to determine the CSI processing model to be activated.

In this example, the MAC CE includes not only a MAC sub-header, but also a MAC CE content, i.e., a first information field. As shown in FIG. 2d, the MAC sub-header includes an LCID field and an R field. Referring to the description of the corresponding example in FIG. 2c, the LCID field can still be used to indicate that the MAC CE indicates activation of the CSI processing model.

Optionally, as shown in reference FIG. 2d, the first information domain can be configured as one or more, for example, the first information domain includes a cell identification domain and a function identification domain; where the function identification domain can be replaced with a model identification domain, or the first information domain includes a cell identification domain, a function identification domain and a model identification domain.

In the above example, the MAC CE does not include the fourth information field, and the fourth information field is an information field used to indicate activation or deactivation.

For a conventional MAC CE, it includes an information field for activation or deactivation (Activation/deactivation, A/D), and the values of the information field are different to indicate activation or deactivation. In this embodiment, when the indication information is sent through the MAC CE, the terminal 101 considers that the CSI processing model is to be activated upon receiving the indication information, and the fourth information field may not be set to save signaling resources.

In the above example, there is no limit on the number of bits in different information fields in the MAC CE, such as the LCID field, the R field or the cell identification field. When the total occupied bits are less than an integer multiple of 8 bits, reserved bits (R bits) can be used to fill the gap.

In another manner, when the indication information is sent through DCI, following two examples may be included.

In the third example, the DCI includes a second information field, and the second information field includes indication information.

Optionally, the second information field may include 1 bit, and when the field value is 1, it indicates that the terminal 101 is to activate the CSI processing model.

In the fourth example, the DCI further includes a third information field, and the third information field indicates an identifier corresponding to the CSI processing model, where the identifier is at least one of a model identifier, a cell identifier, or a function identifier.

Optionally, in this example, the DCI includes a second information field and a third information field. The second information field is used as an enable field to instruct the terminal 101 to activate the CSI processing model; the third information field is used as an ID field to indicate the identifier of the CSI processing model to be activated.

Optionally, the identifier corresponding to the CSI processing model may include at least one of following: a function identifier, a cell identifier, and a model identifier.

In the above examples, the format of the DCI is a defined DCI format, or the DCI is scrambled by a defined RNTI.

Optionally, the DCI may be in DCI format 2_x. Optionally, the DCI may be scrambled by AI-RNTI.

In some embodiments, the terminal 101 receives indication information sent by the network device 102 via MAC CE or DCI.

In Step S2102, the terminal 101 determines the effective time of the indication information.

Optionally, after receiving the indication information, the terminal 101 is to determine the effective time of the indication information to determine the timing of activating the CSI processing model.

Optionally, different signaling for sending indication information have different corresponding effective times.

In some embodiments, when the MAC CE includes indication information, the effective time of the indication information is after a first time and is spaced from the first time by a first duration; where the first time is the uplink time for the terminal to send feedback information corresponding to the MAC CE, and the first duration includes the duration defined by the protocol and the duration configured by the network device.

Optionally, the feedback information corresponding to the MAC CE is Hybrid Automatic Repeat Request Acknowledgement information (HARQ-ACK).

Optionally, the network device 102 may send the MAC CE via a physical downlink shared channel (PDSCH). The first time may be the time when the terminal 101 receives the PDSCH including the MAC CE.

Optionally, the effective time t satisfies: $t = X + Z + {K}_{Mac} , where X = n + {K}_{offset} + {K}_{1} ;$
where X represents the first time, Z represents the protocol-defined duration, *K_{Mac}*, *K_{offset}*, and *K₁* are values indicated by the network device, and n represents a downlink time when the terminal receives the MAC CE.

Optionally, the time may be a time slot, a symbol or a millisecond. Taking a time slot as an example, X may represent slot X, and n may represent slot n.

Optionally, Z can be defined as: $Z = 3 {N}_{slot}^{subframe , μ} + 1$.

Optionally, in a terrestrial network (TN), *K_{Mac}* and *K_{offset}* may be 0.

Optionally, K₁ represents the time interval between the terminal 101 receiving the MAC CE and feeding back the HARQ-ACK.

In some embodiments, when the DCI includes indication information, the effective time of the indication information is after a second duration of the second time; where the second time is a downlink time corresponding to an uplink time when the terminal receives the DCI, and the second duration is a protocol-defined duration or a duration reported by the terminal.

Optionally, the second duration may be related to the capability of terminal 101.

Optionally, the effective time t satisfies:
after (*Y1 + a)* or in a first time-domain unit after (*Y1 + a), and* $Y 1 = \left⌊Y⋅\frac{{2}^{μ {1}_{PUSCH}}}{{2}^{μ {2}_{PDCCH}}}\right⌋$ ;
where Y1 represents the second time, a represents the second duration, Y represents the uplink time when the terminal receives the DCI, └ ┘ represents a rounding-up operation, µ1 is a constant determined according to a subcarrier spacing SCS of a physical uplink shared channel PUSCH, and µ2 is a constant determined according to an SCS of a physical downlink control channel PDCCH.

Optionally, taking time slot as an example, Y1 can represent slot Y1, Y can represent slot Y, and Z can represent slot Z.

Optionally, the subcarrier spacing SCS of the uplink time and the downlink time may be different.

In Step S2103, the terminal 101 activates the CSI processing model after the indication information takes effect.

In some embodiments, the activated CSI processing model may be a reactivated CSI processing model. In combination with the description of the foregoing embodiments, the reactivated CSI processing model may include: resetting the accumulated CSI information.

Optionally, after receiving the indication information, the terminal 101 resets the accumulated CSI information to 0.

Optionally, at the same effective time, the network device 102 reactivates the CSI processing model of the decoding part, that is, resets the accumulated CSI information.

In some embodiments, after activating the CSI processing model, the terminal 101 applies the CSI processing model to perform CSI reporting (CSI report).

Optionally, taking the indication information indicating the reactivation of the CSI processing model as an example, the CSI reporting performed after the effective time includes the CSI obtained by the terminal 101 based on the CSI processing model after reactivation. The CSI reporting performed before the effective time is the CSI obtained by the terminal 101 based on the CSI processing model before reactivation.

In the embodiments, the names of information, and the like are not limited to the names recorded in the embodiments, and terms such as "information", "message", "signal", "signaling", "report", "configuration", "indication", "instruction", "command", "channel", "parameter", "domain", and "field" can be used interchangeably.

In some embodiments, "obtain", "get", "receive", "transmit", "bidirectional transmission", "send and/or receive" can be interchangeable, and can be interpreted as receiving from other entities, obtaining from protocols, obtaining from high levels, obtaining by self-processing, autonomous implementation, and the like.

In some embodiments, terms such as "send", "transmit", "report", "transmit", "bidirectional transmission", "send and/or receive" can be used interchangeably.

In some embodiments, the terms "radio", "wireless", "radio access network (RAN)", "access network (AN)", "RAN-based" and the like may be used interchangeably.

In some embodiments, terms such as "moment", "time point", "time", and "time position" can be interchangeable, and terms such as "duration", "period", "time window", "window", and "time" can be interchangeable.

In some embodiments, the terms "component carrier (CC)", "cell", "frequency carrier", "carrier frequency" and the like may be used interchangeably.

In some embodiments, terms such as "certain", "preset", "preset", "set", "indicated", "some", "any", and "first" can be interchangeable, and "specific A", "preset A", "preset A", "set A", "indicated A", "some A", "any A", and "first A" can be interpreted as A pre-defined in a protocol, and the like, or as A obtained through setting, configuration, or indication, and the like, and can also be interpreted as specific A, some A, any A, or first A, and the like, but is not limited to this.

In some embodiments, the determination or judgment can be performed by a value represented by 1 bit (0 or 1), by a true or false value (Boolean value) represented by true or false, or by comparison of numerical values (for example, comparison with a predetermined value), but is not limited to this.

In some embodiments, "not expecting to receive" can be interpreted as not receiving on time domain resources and/or frequency domain resources, or as not performing subsequent processing on the data after receiving the data; "not expecting to send" can be interpreted as not sending, or as sending but not expecting the recipient to respond to the sent content.

The method involved in the embodiment of the present disclosure may include at least one of steps S2101 to S2103, such as the method includes step S2101.

In some embodiments, at least one of steps S2102 and S2103 is optional, and one or more of these steps may be omitted or replaced in different embodiments.

In some embodiments, reference may be made to other optional implementations recorded before or after the description corresponding to FIG. 2a.

FIG. 3a is a flow chart of a method for receiving indication information according to embodiments of the present disclosure. As shown in FIG. 3a, embodiments of the present disclosure relate to a method for receiving indication information, which is executed by a terminal 101, and the method includes the followings.

In Step S3101, indication information is obtained.

In some embodiments, the implementation of step S3101 may refer to the optional implementation of step S2101 in FIG. 2a, which will not be described in detail here.

Optionally, the terminal 101 may obtain indication information from the network device 102 or other entities.

In Step S3102, the effective time of the indication information is determined.

In some embodiments, the implementation of step S3102 may refer to the optional implementation of step S2102 in FIG. 2a, which will not be described in detail here.

In Step S3103, the CSI processing model is activated after the indication information takes effect.

In some embodiments, the implementation of step S3103 may refer to the optional implementation of step S2103 in FIG. 2a, which will not be described in detail here.

The method involved in the embodiment of the present disclosure may include at least one of steps S3101 to S3103, such as the method includes step S3101.

In some embodiments, at least one of steps S3102 and S3103 is optional, and one or more of these steps may be omitted or replaced in different embodiments.

In some embodiments, reference may be made to other optional implementations recorded before or after the description corresponding to FIG. 3a.

FIG. 3b is a flow chart of a method for receiving indication information according to embodiments of the present disclosure. As shown in FIG. 3b, embodiments of the present disclosure relate to a method for receiving indication information, which is executed by a terminal 101, and the method includes:

In Step S3201, a MAC CE sent by the network device 102 is received, where the MAC CE includes indication information.

In some embodiments, the implementation of step S3201 may refer to the optional implementation of step S2101 in FIG. 2a, which will not be described in detail here.

Optionally, the MAC CE includes a MAC sub-header, and the MAC sub-header includes indication information.

Optionally, the MAC CE further includes a first information field, where the first information field indicates at least one of following:
a model identifier corresponding to the CSI processing model;
a cell identifier corresponding to the CSI processing model;
a function identifier corresponding to the CSI processing model.

Optionally, the MAC CE does not include the fourth information field, and the fourth information field is an information field used to indicate activation or deactivation.

In Step S3202, the validity time of the MAC CE is determined.

In some embodiments, the implementation of step S3202 may refer to the optional implementation of step S2102 in FIG. 2a, which will not be described in detail here.

Optionally, when the MAC CE includes indication information, the effective time of the indication information is after a first time and is spaced from the first time by a first duration; where the first time is the uplink time when the terminal sends feedback information corresponding to the MAC CE, and the first duration includes the duration defined by the protocol and the duration configured by the network device.

Optionally, the effective time t satisfies: $t = X + Z + {K}_{Mac} , where X = n + {K}_{offset} + {K}_{1} ;$
where X represents the first time, Z represents the protocol-defined duration, *K_{Mac}*, *K_{offset}*, and *K₁* are values indicated by the network device, and n represents a downlink time when the terminal receives the MAC CE.

In some embodiments, reference may be made to other optional implementations recorded before or after the specification corresponding to FIG. 3b.

FIG. 3c is a flow chart of a method for receiving indication information according to embodiments of the present disclosure. As shown in FIG. 3c, embodiments of the present disclosure relate to a method for receiving indication information, which is executed by a terminal 101, and the method includes the followings.

In Step S3301, DCI sent by a network device is receive, where the DCI includes indication information.

In some embodiments, the implementation of step S3301 may refer to the optional implementation of step S2101 in FIG. 2a, which will not be described in detail here.

Optionally, the DCI includes a second information field, and the second information field includes indication information.

Optionally, the DCI also includes a third information field, where the third information field indicates an identifier corresponding to the CSI processing model, where the identifier is at least one of a model identifier, a cell identifier, or a function identifier.

Optionally, the format of the DCI is a defined DCI format, or the DCI is scrambled by a defined radio network temporary identifier RNTI.

In Step S3302, the effective time of the DCI is determined.

In some embodiments, the implementation of step S3302 may refer to the optional implementation of step S2102 in FIG. 2a, which will not be described in detail here.

Optionally, when the DCI includes indication information, the effective time of the indication information is after a second duration of the second time; where the second time is a downlink time corresponding to an uplink time when the terminal receives the DCI, and the second duration is a duration defined by the protocol or a duration reported by the terminal.

Optionally, the effective time t satisfies:
after (*Y1 + a)* or in a first time-domain unit after (*Y1 + a)*, and $Y 1 = \left⌊Y⋅\frac{{2}^{μ {1}_{PUSCH}}}{{2}^{μ {2}_{PDCCH}}}\right⌋$ ;
where Y1 represents the second time, a represents the second duration, Y represents the uplink time when the terminal receives the DCI, └ ┘ represents a rounding-up operation, µ1 is a constant determined according to a subcarrier spacing SCS of a physical uplink shared channel PUSCH, and µ2 is a constant determined according to an SCS of a physical downlink control channel PDCCH..

In some embodiments, reference may be made to other optional implementations recorded before or after the specification corresponding to FIG. 3c.

FIG. 3d is a flow chart of a method for receiving indication information according to embodiments of the present disclosure. As shown in FIG. 3d, embodiments of the present disclosure relate to a method for receiving indication information, which is executed by a terminal 101, and the method includes the followings.

In Step S3401, terminal 101 receives indication information sent by network device 102.

In some embodiments, the implementation of step S3401 may refer to the optional implementation of step S2101 in FIG. 2a, which will not be described in detail here.

Optionally, the indication information indicates the terminal to activate a CSI processing model before applying a channel state information CSI processing model based on artificial intelligence AI or machine learning ML; where the CSI processing model is used for performing CSI processing according to spatial domain information, frequency domain information and time domain information.

In some embodiments, activating the CSI processing model includes: resetting the accumulated CSI information in the CSI processing model to a default value or an initial value; or resetting the accumulated CSI information based on terminal capabilities or terminal implementations.

Optionally, the accumulated CSI information is determined according to historical CSI obtained through multiple measurements.

In some embodiments, the terminal receives the indication information sent by the network device, including one of following:
receiving, by the terminal, a medium access control control element MAC CE sent by the network device, where the MAC CE includes the indication information; or
receiving, by the terminal, downlink control information DCI sent by the network device, where the DCI includes the indication information.

In some embodiments, the MAC CE includes a MAC sub-header, and the MAC sub-header includes the indication information.

Optionally, the MAC CE further includes a first information field, where the first information field indicates at least one of following:
a model identifier corresponding to the CSI processing model;
a cell identifier corresponding to the CSI processing model;
a function identifier corresponding to the CSI processing model.

Optionally, the MAC CE does not include the fourth information field, and the fourth information field is an information field used to indicate activation or deactivation.

In some embodiments, the DCI includes a second information field, and the second information field includes indication information.

Optionally, the DCI also includes a third information field, where the third information field indicates an identifier corresponding to the CSI processing model, where the identifier is at least one of a model identifier, a cell identifier, or a function identifier.

Optionally, the format of the DCI is a defined DCI format, or the DCI is scrambled by a defined radio network temporary identifier RNTI.

In some embodiments, when the MAC CE includes indication information, the effective time of the indication information is after a first time and is spaced from the first time by a first duration; where the first time is the uplink time for the terminal to send feedback information corresponding to the MAC CE, and the first duration includes the duration defined by the protocol and the duration configured by the network device.

Optionally, the effective time t satisfies: $t = X + Z + {K}_{Mac} , and X = n + {K}_{offset} + {K}_{1} ;$ where X represents the first time, Z represents the protocol-defined duration, *K_{Mac}*, *K_{offset}*, and *K₁* are values indicated by the network device, and n represents a downlink time when the terminal receives the MAC CE.

In some embodiments, when the DCI includes indication information, the effective time of the indication information is after a second duration of the second time; where the second time is a downlink time corresponding to an uplink time when the terminal receives the DCI, and the second duration is a duration defined by the protocol or a duration reported by the terminal.

Optionally, the effective time t satisfies:
after (*Y1 + a)* or in a first time-domain unit after (*Y1 + a)*, and $Y 1 = \left⌊Y⋅\frac{{2}^{μ {1}_{PUSCH}}}{{2}^{μ {2}_{PDCCH}}}\right⌋$ ;
where Y1 represents the second time, a represents the second duration, Y represents the uplink time when the terminal receives the DCI, └ ┘ represents a rounding-up operation, µ1 is a constant determined according to a subcarrier spacing SCS of a physical uplink shared channel PUSCH, and µ2 is a constant determined according to an SCS of a physical downlink control channel PDCCH.

In some embodiments, reference may be made to other optional implementations recorded before or after the specification corresponding to FIG. 3d.

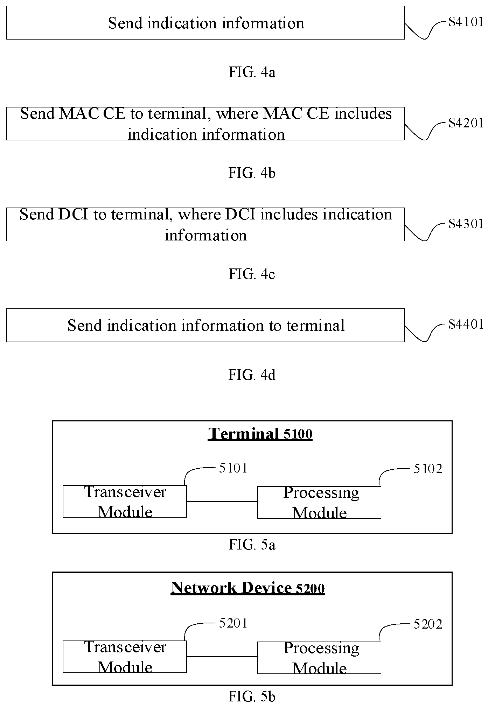

FIG. 4a is a flow chart of a method for sending indication information according to embodiments of the present disclosure. As shown in FIG. 4a, embodiments of the present disclosure relate to a method for sending indication information, which is executed by a network device 102, and the method includes the followings.

In Step S4101, indication information is sent.

In some embodiments, the implementation of step S4101 may refer to the optional implementation of step S2101 in FIG. 2a, which will not be described in detail here.

Optionally, the network device 102 may send indication information to the terminal 101 or other entities.

In some embodiments, reference may be made to other optional implementations recorded before or after the description corresponding to FIG. 4a.

FIG. 4b is a flow chart of a method for sending indication information according to embodiments of the present disclosure. As shown in FIG. 4b, embodiments of the present disclosure relate to a method for sending indication information, which is executed by a network device 102, and the method includes the followings.

In Step S4201, MAC CE is sent to terminal 101, where MAC CE includes indication information.

In some embodiments, the implementation of step S4201 may refer to the optional implementation of step S2101 in FIG. 2a, which will not be described in detail here.

In some embodiments, the MAC CE includes a MAC sub-header, and the MAC sub-header includes the indication information.

Optionally, the MAC CE further includes a first information field, where the first information field indicates at least one of following:
a model identifier corresponding to the CSI processing model;
a cell identifier corresponding to the CSI processing model;
a function identifier corresponding to the CSI processing model.

Optionally, the MAC CE does not include the fourth information field, and the fourth information field is an information field used to indicate activation or deactivation.

In some embodiments, when the MAC CE includes indication information, the effective time of the indication information is after a first time and is spaced from the first time by a first duration; where the first time is the uplink time for the terminal to send feedback information corresponding to the MAC CE, and the first duration includes the duration defined by the protocol and the duration configured by the network device.

Optionally, the effective time t satisfies: $t = X + Z + {K}_{Mac} , and X = n + {K}_{offset} + {K}_{1} ;$ where X represents the first time, Z represents the protocol-defined duration, *K_{Mac}*, *K_{offset}*, and *K₁* are values indicated by the network device, and n represents a downlink time when the terminal receives the MAC CE.

In some embodiments, reference may be made to other optional implementations recorded before or after the specification corresponding to FIG. 4b.

FIG. 4c is a flow chart of a method for sending indication information according to embodiments of the present disclosure. As shown in FIG. 4c, embodiments of the present disclosure relate to a method for sending indication information, which is executed by a network device 102, and the method includes the followings.

In Step S4301, DCI is sent to terminal 101, where DCI includes indication information.

In some embodiments, the implementation of step S4301 may refer to the optional implementation of step S2101 in FIG. 2a, which will not be described in detail here.

In some embodiments, the DCI includes a second information field, and the second information field includes indication information.

Optionally, the DCI also includes a third information field, where the third information field indicates an identifier corresponding to the CSI processing model, where the identifier is at least one of a model identifier, a cell identifier, or a function identifier.

Optionally, the format of the DCI is a defined DCI format, or the DCI is scrambled by a defined RNTI.

In some embodiments, when the DCI includes indication information, the effective time of the indication information is after a second duration of the second time; where the second time is a downlink time corresponding to an uplink time when the terminal receives the DCI, and the second duration is a duration defined by the protocol or a duration reported by the terminal.

Optionally, the effective time t satisfies:
after (*Y1 + a)* or in a first time-domain unit after (*Y1 + a)*, and $Y 1 = \left⌊Y⋅\frac{{2}^{μ {1}_{PUSCH}}}{{2}^{μ {2}_{PDCCH}}}\right⌋$ ;
where Y1 represents the second time, a represents the second duration, Y represents the uplink time when the terminal receives the DCI, └ ┘ represents a rounding-up operation, µ1 is a constant determined according to a subcarrier spacing SCS of a physical uplink shared channel PUSCH, and µ2 is a constant determined according to an SCS of a physical downlink control channel PDCCH.

In some embodiments, reference may be made to other optional implementations recorded before or after the specification corresponding to FIG. 4c.

FIG. 4d is a flow chart of a method for sending indication information according to embodiments of the present disclosure. As shown in FIG. 4d, embodiments of the present disclosure relate to a method for sending indication information, which is executed by a network device 102, and the method includes the followings.

In Step S4401, indication information is sent to terminal 101.

In some embodiments, the implementation of step S4401 can refer to the optional implementation of step S2101 in FIG. 2a, which will not be repeated here.

Optionally, the indication information indicates the terminal to activate a CSI processing model before applying an AI or ML-based CSI processing model; where the CSI processing model is used for performing CSI processing according to spatial domain information, frequency domain information, and time domain information.

In some embodiments, activating the CSI processing model includes: resetting the accumulated CSI information in the CSI processing model to a default value or an initial value; or resetting the accumulated CSI information based on terminal capabilities or terminal implementations.

Optionally, the accumulated CSI information is determined according to historical CSI obtained through multiple measurements.

In some embodiments, the network device sends the indication information to the terminal, including one of following:
sending, by the network device, a medium access control control element MAC CE to the terminal, where the MAC CE includes the indication information; or
sending, by the network device, downlink control information DCI to the terminal, where the DCI includes the indication information.

In some embodiments, the MAC CE includes a MAC sub-header, and the MAC sub-header includes the indication information.

Optionally, the MAC CE further includes a first information field, where the first information field indicates at least one of following:
a model identifier corresponding to the CSI processing model;
a cell identifier corresponding to the CSI processing model;
a function identifier corresponding to the CSI processing model.

Optionally, the MAC CE does not include the fourth information field, and the fourth information field is an information field used to indicate activation or deactivation.

In some embodiments, the DCI includes a second information field, and the second information field includes indication information.

Optionally, the DCI also includes a third information field, where the third information field indicates an identifier corresponding to the CSI processing model, where the identifier is at least one of a model identifier, a cell identifier, or a function identifier.

Optionally, the format of the DCI is a defined DCI format, or the DCI is scrambled by a defined RNTI.

In some embodiments, when the MAC CE includes the indication information, the effective time of the indication information is after the first time and spaced from the first time by a first duration.

The first time is the uplink time when the terminal sends feedback information corresponding to the MAC CE, and the first duration includes the duration defined by the protocol and the duration configured by the network device.

Optionally, the effective time t satisfies: $t = X + Z + {K}_{Mac} , where X = n + {K}_{offset} + {K}_{1} ;$ where X represents the first time, Z represents the protocol-defined duration, *K_{Mac}*, *K_{offset}*, and *K₁* are values indicated by the network device, and n represents a downlink time when the terminal receives the MAC CE.

In some embodiments, when the DCI includes the indication information, an effective time of the indication information is after a second time by a second duration;
where the second time is a downlink time corresponding to an uplink time when the terminal receives the DCI, and the second duration is a protocol-defined duration or a duration reported by the terminal.

Optionally, the effective time t satisfies:
after (*Y1 + a)* or in a first time-domain unit after (*Y1 + a)*, and $Y 1 = \left⌊Y⋅\frac{{2}^{μ {1}_{PUSCH}}}{{2}^{μ {2}_{PDCCH}}}\right⌋$ ;
where Y1 represents the second time, a represents the second duration, Y represents the uplink time when the terminal receives the DCI, └ ┘ represents a rounding-up operation, µ1 is a constant determined according to a subcarrier spacing SCS of a physical uplink shared channel PUSCH, and µ2 is a constant determined according to an SCS of a physical downlink control channel PDCCH.

In some embodiments, reference may be made to other optional implementations recorded before or after the specification corresponding to FIG. 4d.

The method disclosed in the present invention can solve the problem of reusing the model when the UE model remains unchanged but the historical information changes. To facilitate understanding of the embodiments of the present invention, some specific examples are listed below:

### Example 1:

The UE reactivates the AI CSI s-f-t compression model according to the instruction of the base station.

Optionally, the indication of the base station may correspond to the indication information of the aforementioned embodiment.

### Example 2:

Reactivating the AI CSI s-f-t compression model at least includes: resetting the accumulated CSI information of the previous time unit temporarily stored in the model.

Optionally, the reset behavior may be to reset to all 0, or to reset to a specific initial value, or the reset behavior may depend on the implementation of the UE.

### Example 3:

The base station's instruction is indicated through MAC CE signaling. When the UE receives the MAC CE signaling, the UE reactivates the AI CSI s-f-t compression model.

In one embodiment, the MAC CE may include only a MAC sub-header, but not specific content. A specific logical channel identification (LCID) is used to distinguish the MAC CE. As shown in FIG. 2c, the MAC CE includes only a MAC sub-header, and the content of the MAC sub-header may include two parts: an R bit and an LCID, where the LCID indicates that the MAC CE indicates the reactivation of the model.

In one embodiment, the MAC CE includes at least one of a model ID, a cell ID, and a functionality ID. As shown in FIG. 2d, the MAC CE includes a MAC sub-header and MAC CE content. The MAC sub-header may include two parts, an R bit and an LCID. The LCID indicates that the MAC CE indicates the reactivation of the model. The MAC CE includes a cell ID and a functionality ID. The cell ID indicates the cell where the model to be reactivated is located, and the functionality ID indicates the functional ID corresponding to the model to be reactivated.

Optionally, functionality ID can also be replaced with model ID; model ID indicates the ID of the model to be reactivated.

Optionally, the MAC CE may also include functionality ID and model ID.

In one embodiment, unlike other MAC CE information used for activation or deactivation, the MAC CE does not contain A/D information because the UE has only one behavior after receiving the information, that is, reactivating the AI CSI s-f-t compression model.

In different embodiments of Example 3, there is no limit on the number of bits of different information fields (such as LCID, R, cell ID, and the like) in MAC CE. If it is less than an integer multiple of 8 bits, it can be padded with R bits.

### Example 4:

The base station's indication is through DCI signaling. When the UE receives the DCI signaling containing the indication, the AI CSI s-f-t compression model is reactivated.

Optionally, this information is indicated by a field in the DCI, and when the field is 1, it indicates that the UE wants to reactivate the model.

Optionally, the information is represented by two fields in the DCI, one field is an enable field, when the field is 1, it means that the UE wants to reactivate the model; the other field is an ID field, which is used to determine the model ID to be reactivated. For example, this ID can be a functionality ID or a model ID.

In one embodiment, the DCI may be a specific DCI format, such as DCI format 2_x.

In one embodiment, the DCI may be a DCI scrambled by a special RNTI, such as AI-RNTI.

### Example 5:

The UE determines the effective time of the reactivation signaling.

Optionally, the reactivation signaling is MAC CE, and the slot where the UE feedbacks the HARQ-ACK information containing the MAC CE is the uplink slot#X, such as slot#X=slot n*+K_{offset}+*K1, where slot n is the slot where the UE receives the PDSCH containing the MAC CE. Then the effective time is uplink slot#X+Kmac+Z, where Z is a predefined time length, for example $Z = 3 {N}_{slot}^{subframe , μ} + 1$, Kmac is the value configured by the base station.

Optionally, the reactivation signaling is DCI, and the slot where the UE receives the DCI is downlink slot#Y, then the effective time is uplink slot#Z, slot#Z is the first slot not earlier than $\left⌊Y⋅\frac{{2}^{{μ}_{PUSCH}}}{{2}^{{μ}_{PDCCH}}}\right⌋ + a$, a is a predefined value or a is a value reported by the UE capability.

### Example 6:

The method in this example may include following steps Step 1 to Step 3.

Step 1. The base station configures the CSI-Al-model configuration for the UE, such as CSI-Al-model #1.

Step 2. The base station reactivates CSI-AI-model#1 using MAC CE in slot#n, and the uplink and downlink SCSs are the same.

Step 3. The UE feeds back the HARQ-ACK information of the MAC CE in uplink slot #X = slot n *+ K_{offset} +* K1. Then the effective time of the MAC CE is uplink slot #X + Kmac + Z, where Z is a predefined time length (such as $Z = 3 {N}_{slot}^{subframe , μ} + 1$), and Kmac is the value configured by the base station.

The embodiments of the present disclosure also propose a device for implementing any of the above methods, for example, a device is proposed, the above device includes a unit or module for implementing each step performed by the terminal in any of the above methods. For another example, another device is also proposed, including a unit or module for implementing each step performed by a network device (such as an access network device, a core network function node, a core network device, and the like) in any of the above methods.

It should be understood that the division of the units or modules in the above device is only a division of logical functions, and in actual implementation, they can be fully or partially integrated into one physical entity, or they can be physically separated. In addition, the units or modules in the device can be implemented in the form of a processor calling software: for example, the device includes a processor, the processor is connected to a memory, and instructions are stored in the memory. The processor calls the instructions stored in the memory to implement any of the above methods or implement the functions of the units or modules of the above device, where the processor is, for example, a general-purpose processor, such as a central processing unit (CPU) or a microprocessor, and the memory is a memory inside the device or a memory outside the device. Alternatively, the units or modules in the device can be implemented in the form of hardware circuits, and the functions of some or all of the units or modules can be realized by designing the hardware circuits. The above hardware circuits can be understood as one or more processors; for example, in one implementation, the above hardware circuit is an application-specific integrated circuit (ASIC), and the functions of some or all of the above units or modules are realized by designing the logical relationship of the components in the circuit; for example, in another implementation, the above hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above devices can be realized in the form of a processor calling software, or in the form of a hardware circuit, or in part by a processor calling software, and the rest by a hardware circuit.

In the embodiments, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP), and the like; in another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), and the like.

FIG. 5a is a structure schematic diagram of a terminal proposed in embodiments of the present disclosure. As shown in FIG. 5a, the terminal 5100 may include: at least one of a transceiver module 5101, a processing module 5102, and the like. In some embodiments, the transceiver module 5101 is used to receive indication information sent by a network device, and the indication information indicates the terminal to activate the CSI processing model before applying the channel state information CSI processing model based on artificial intelligence AI or machine learning ML; where the CSI processing model is used for performing CSI processing according to spatial domain information, frequency domain information, and time domain information.

Optionally, the transceiver module 5101 is used to perform at least one of the communication steps such as sending and/or receiving executed by the terminal 101 in any of the above methods, which will not be described in detail here. Optionally, the processing module 5102 is used to perform at least one of the other steps executed by the terminal 101 in any of the above methods, which will not be described in detail here.

FIG. 5b is a structure schematic diagram of the terminal proposed in embodiments of the present disclosure. As shown in FIG. 5b, the network device 5200 may include: at least one of a transceiver module 5201, a processing module 5202, and the like. In some embodiments, the transceiver module 5201 is used to send indication information to the terminal, and the indication information indicates the terminal to activate the CSI processing model before applying the AI or ML-based CSI processing model; where the CSI processing model is used for performing CSI processing according to spatial domain information, frequency domain information, and time domain information.

Optionally, the transceiver module 5201 is used to perform at least one of the communication steps such as sending and/or receiving executed by the network device 102 in any of the above methods, which will not be described in detail here. Optionally, the processing module 5202 is used to perform at least one of the other steps executed by the network device 102 in any of the above methods, which will not be described in detail here.

In some embodiments, the transceiver module may include a sending module and/or a receiving module, and the sending module and the receiving module may be separate or integrated. Optionally, the transceiver module may be interchangeable with the transceiver.

In some embodiments, the processing module can be a module or include multiple submodules. Optionally, the multiple submodules respectively execute all or part of the steps required to be executed by the processing module. Optionally, the processing module can be replaced with the processor.

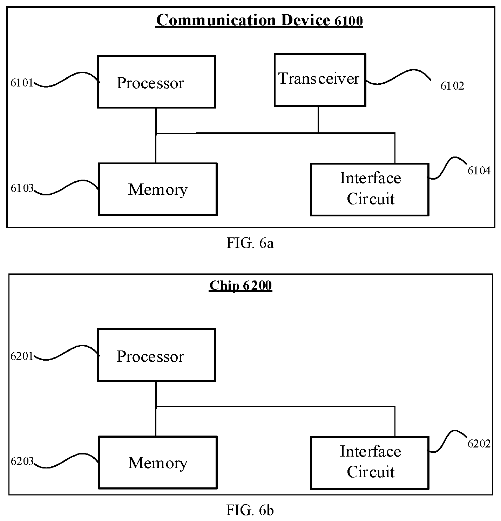

FIG. 6a is a structure schematic diagram of a communication device 6100 proposed in embodiments of the present disclosure. The communication device 6100 may be a network device (e.g., an access network device, a core network device, and the like), or a terminal (e.g., a user device, and the like), or a chip, a chip system, or a processor that supports a network device to implement any of the above methods, or a chip, a chip system, or a processor that supports a terminal to implement any of the above methods. The communication device 6100 may be used to implement the method described in the above method embodiment, and the details may refer to the description in the above method embodiment.

As shown in FIG. 6a, the communication device 6100 includes one or more processors 6101. The processor 6101 may be a general-purpose processor or a dedicated processor, for example, a baseband processor or a central processing unit. The baseband processor may be used to process the communication protocol and the communication data, and the central processing unit may be used to control the communication device (such as a base station, a baseband chip, a terminal device, a terminal device chip, a DU or a CU, and the like), execute the program, and process the data of the program. Optionally, the communication device 6100 is used to execute any of the above methods. Optionally, one or more processors 6101 are used to call instructions so that the communication device 6100 executes any of the above methods.

In some embodiments, the communication device 6100 further includes one or more transceivers 6102. When the communication device 6100 includes one or more transceivers 6102, the transceiver 6102 performs at least one of the communication steps such as sending and/or receiving in the above method, and the processor 6101 performs at least one of the other steps. In an optional embodiment, the transceiver may include a receiver and/or a transmitter, and the receiver and the transmitter may be separated or integrated. Optionally, the terms such as transceiver, transceiver unit, transceiver circuit, interface circuit, interface, and the like, may be replaced with each other, the terms such as transmitter, transmission unit, transmission circuit, and the like, may be replaced with each other, and the terms such as receiver, receiving unit, receiving circuit, and the like, may be replaced with each other.

In some embodiments, the communication device 6100 further includes one or more memories 6103 for storing data. Optionally, all or part of the memories 6103 may also be outside the communication device 6100. In an optional embodiment, the communication device 6100 may include one or more interface circuits 6104. Optionally, the interface circuit 6104 is connected to the memory 6103, and the interface circuit 6104 may be used to receive data from the memory 6103 or other devices, and may be used to send data to the memory 6103 or other devices. For example, the interface circuit 6104 may read the data stored in the memory 6103 and send the data to the processor 6101.

The communication device 6100 described in the above embodiment may be a network device or a terminal, but the scope of the communication device 6100 described in the present disclosure is not limited thereto, and the structure of the communication device 6100 may not be limited by FIG. 6a. The communication device may be an independent device or may be part of a larger device. For example, the communication device may be: 1) an independent integrated circuit IC, or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, and the like; (6) others, and the like.

FIG. 6b is a structure schematic diagram of a chip 6200 provided in embodiments of the present disclosure. In the case where the communication device 6100 may be a chip or a chip system, reference may be made to the schematic diagram of the structure of the chip 6200 shown in FIG. 6b, but the present invention is not limited thereto.

The chip 6200 includes one or more processors 6201. The chip 6200 is configured to execute any of the above methods.

In some embodiments, the chip 6200 further includes one or more interface circuits 6202. Optionally, the terms such as interface circuit, interface, transceiver pin, and the like, can be interchangeable. In some embodiments, the chip 6200 further includes one or more memories 6203 for storing data. Optionally, all or part of the memory 6203 can be outside the chip 6200. Optionally, the interface circuit 6202 is connected to the memory 6203, and the interface circuit 6202 can be used to receive data from the memory 6203 or other devices, and the interface circuit 6202 can be used to send data to the memory 6203 or other devices. For example, the interface circuit 6202 can read the data stored in the memory 6203 and send the data to the processor 6201.

In some embodiments, the interface circuit 6202 performs at least one of the communication steps such as sending and/or receiving in the above method. The interface circuit 6202 performs the communication steps such as sending and/or receiving in the above method, for example, means that the interface circuit 6202 performs data interaction between the processor 6201, the chip 6200, the memory 6203 or the transceiver device. In some embodiments, the processor 6201 performs at least one of the other steps.

The modules and/or devices described in the embodiments such as virtual devices, physical devices, chips, and the like, can be combined or separated as needed. Optionally, some or all steps can also be performed by multiple modules and/or devices in collaboration, which is not limited here.

The present disclosure also proposes a storage medium, on which instructions are stored, and when the instructions are executed on the communication device 6100, the communication device 6100 executes any of the above methods. Optionally, the storage medium is an electronic storage medium. Optionally, the storage medium is a computer-readable storage medium, but is not limited to this, and it can also be a storage medium readable by other devices. Optionally, the storage medium can be a non-transitory storage medium, but is not limited to this, and it can also be a temporary storage medium.

The present disclosure also proposes a program product, which, when executed by the communication device 6100, enables the communication device 6100 to execute any of the above methods. Optionally, the program product is a computer program product.

The present disclosure also proposes a computer program, which, when executed on a computer, causes the computer to execute any one of the above methods.

### Industrial Applicability

The terminal learns whether the CSI processing model is to be activated by receiving the indication information sent by the network device, so that the terminal can activate the CSI processing model at an appropriate time based on the indication of the network device to ensure the accuracy of the applied CSI processing model.

## Claims

1. A method for receiving indication information, wherein the method comprises:
receiving, by a terminal, the indication information sent by a network device, wherein the indication information indicates the terminal to activate an artificial intelligence AI-based channel state information CSI processing model or a machine learning ML-based CSI processing model before applying the CSI processing model; and wherein the CSI processing model is used for performing CSI processing based on spatial domain information, frequency domain information, and time domain information.

2. The method according to claim 1, wherein receiving, by the terminal, the indication information sent by the network device comprises one of following:
receiving, by the terminal, a medium access control control element MAC CE sent by the network device, wherein the MAC CE comprises the indication information; or
receiving, by the terminal, downlink control information DCI sent by the network device, wherein the DCI comprises the indication information.

3. The method according to claim 2, wherein
the MAC CE comprises a MAC sub-header, and the MAC sub-header comprises the indication information.

4. The method according to claim 3, wherein
the MAC CE further comprises a first information field, and the first information field indicates at least one of following:
a model identifier corresponding to the CSI processing model;
a cell identifier corresponding to the CSI processing model;
a function identifier corresponding to the CSI processing model.

5. The method according to claim 2, wherein
the DCI comprises a second information field, and the second information field comprises the indication information.

6. The method according to claim 5, wherein
the DCI further comprises a third information field, and the third information field indicates an identifier corresponding to the CSI processing model, wherein the identifier is at least one of a model identifier, a cell identifier, or a function identifier.

7. The method according to claim 2, 5, or 6, wherein
a format of the DCI is a defined DCI format, or the DCI is scrambled by a defined radio network temporary identifier RNTI.

8. The method according to any one of claims 2 to 4, wherein
when the MAC CE comprises the indication information, an effective time of the indication information is after a first time and is spaced from the first time by a first duration;
wherein the first time is an uplink time when the terminal sends feedback information corresponding to the MAC CE, and the first duration comprises a protocol-defined duration and a duration configured by the network device.

9. The method according to claim 8, wherein the effective time t satisfies: $t = X + Z + {K}_{Mac} ,$ and $X = n + {K}_{offset} + {K}_{1} ;$ where X represents the first time, Z represents the protocol-defined duration, *K_{Mac}*, *K_{offset}*, and *K₁* are values indicated by the network device, and n represents a downlink time when the terminal receives the MAC CE.

10. The method according to claim 2 or any one of claims 5 to 7, wherein
when the DCI comprises the indication information, an effective time of the indication information is after a second time by a second duration;
wherein the second time is a downlink time corresponding to an uplink time when the terminal receives the DCI, and the second duration is a protocol-defined duration or a duration reported by the terminal.

11. The method according to claim 10, wherein the effective time t satisfies:
after (*Y1 + a)* or in a first time-domain unit after (*Y1 + a)*, and $Y 1 = \left⌊Y⋅\frac{{2}^{μ 1} PUSCH}{{2}^{μ 2} PDCCH}\right⌋ ;$
where Y1 represents the second time, *a* represents the second duration, Y represents the uplink time when the terminal receives the DCI, └ ┘ represents a rounding-up operation, µ1 is a constant determined according to a subcarrier spacing SCS of a physical uplink shared channel PUSCH, and µ2 is a constant determined according to an SCS of a physical downlink control channel PDCCH.

12. The method according to any one of claims 1 to 11, wherein
activating the CSI processing model comprises: resetting accumulated CSI information in the CSI processing model to a default value or an initial value; or resetting the accumulated CSI information based on a terminal capability or terminal implementation.

13. The method according to claim 12, wherein
the accumulated CSI information is determined based on historical CSI obtained from multiple measurements.

14. A method for sending indication information, wherein the method comprises:
sending, by a network device, the indication information to a terminal, wherein the indication information indicates the terminal to activate an artificial intelligence AI-based channel state information CSI processing model or a machine learning ML-based CSI processing model before applying the CSI processing model; and wherein the CSI processing model is used for performing CSI processing based on spatial domain information, frequency domain information, and time domain information.

15. The method according to claim 14, wherein sending, by the network device, the indication information to the terminal comprises one of following:
sending, by the network device, a medium access control control element MAC CE to the terminal, wherein the MAC CE comprises the indication information; or
sending, by the network device, downlink control information DCI to the terminal, wherein the DCI comprises the indication information.

16. The method according to claim 15, wherein
the MAC CE comprises a MAC sub-header, and the MAC sub-header comprises the indication information.

17. The method according to claim 16, wherein
the MAC CE further comprises a first information field, and the first information field indicates at least one of following:
a model identifier corresponding to the CSI processing model;
a cell identifier corresponding to the CSI processing model;
a function identifier corresponding to the CSI processing model.

18. The method according to claim 15, wherein
the DCI comprises a second information field, and the second information field comprises the indication information.

19. The method according to claim 18, wherein
the DCI further comprises a third information field, and the third information field indicates an identifier corresponding to the CSI processing model, wherein the identifier is at least one of a model identifier, a cell identifier, or a function identifier.

20. The method according to claim 15, 18, or 19, wherein
a format of the DCI is a defined DCI format, or the DCI is scrambled by a defined radio network temporary identifier RNTI.

21. The method according to any one of claims 15 to 17, wherein
when the MAC CE comprises the indication information, an effective time of the indication information is after a first time and is spaced from the first time by a first duration;
wherein the first time is an uplink time when the terminal sends feedback information corresponding to the MAC CE, and the first duration comprises a protocol-defined duration and a duration configured by the network device.

22. The method according to claim 21, wherein the effective time t satisfies: $t = X + Z + {K}_{Mac} ,$ and $X = n + {K}_{offset} + {K}_{1} ;$ where X represents the first time, Z represents the protocol-defined duration, *K_{Mac}*, *K_{offset}*, and *K₁* are values indicated by the network device, and n represents a downlink time when the terminal receives the MAC CE.

23. The method according to claim 15 or any one of claims 18 to 20, wherein
when the DCI comprises the indication information, an effective time of the indication information is after a second time by a second duration;
wherein the second time is a downlink time corresponding to an uplink time when the terminal receives the DCI, and the second duration is a protocol-defined duration or a duration reported by the terminal.

24. The method according to claim 23, wherein the effective time t satisfies:
after (*Y1 + a)* or in a first time-domain unit after (*Y1 + a)*, and $Y 1 = \left⌊Y⋅\frac{{2}^{μ 1} PUSCH}{{2}^{μ 2} PDCCH}\right⌋ ;$
where Y1 represents the second time, a represents the second duration, Y represents the uplink time when the terminal receives the DCI, └ ┘ represents a rounding-up operation, µ1 is a constant determined according to a subcarrier spacing SCS of a physical uplink shared channel PUSCH, and µ2 is a constant determined according to an SCS of a physical downlink control channel PDCCH.

25. The method according to any one of claims 14 to 24, wherein
activating the CSI processing model comprises: resetting accumulated CSI information in the CSI processing model to a default value or an initial value; or resetting the accumulated CSI information based on a terminal capability or terminal implementation.

26. The method according to claim 25, wherein
the accumulated CSI information is determined based on historical CSI obtained from multiple measurements by the terminal.

27. A terminal, wherein the terminal comprises:
a transceiver module configured to receive indication information sent by a network device, wherein the indication information indicates the terminal to activate a channel state information CSI processing model before applying the CSI processing model based on artificial intelligence AI or machine learning ML; and wherein the CSI processing model is used for performing CSI processing based on spatial domain information, frequency domain information, and time domain information.

28. A network device, wherein the network device comprises:
a transceiver module configured to send indication information to a terminal, wherein the indication information indicates the terminal to activate a channel state information CSI processing model before applying the CSI processing model based on artificial intelligence AI or machine learning ML; and wherein the CSI processing model is used for performing CSI processing based on spatial domain information, frequency domain information, and time domain information.

29. A terminal, wherein the terminal comprises:
one or more processors;
wherein the terminal is configured to perform the method according to any one of claims 1 to 13.

30. A network device, wherein the network device comprises:
one or more processors;
wherein the network device is configured to perform the method according to any one of claims 14 to 26.

31. A communication system, wherein the communication system comprises a terminal and a network device, wherein
the terminal is configured to implement the method according to any one of claims 1 to 13; and
the network device is configured to implement the method according to any one of claims 14 to 26.

32. A storage medium, wherein the storage medium stores instructions, and
the instructions, when running on a communication device, cause the communication device to perform the method according to any one of claims 1 to 13 or any one of claims 14 to 26.
